Europäisches Patentamt

European Patent Office

Office européen des brevets

(19)

(11) Numéro de publication: **0 295 234**
**A1**

(12) **DEMANDE DE BREVET EUROPEEN**

(21) Numéro de dépôt: **88870105.9**

(22) Date de dépôt: **09.06.88**

(51) Int. Cl.⁴: **H 02 H 7/04**

(30) Priorité: **10.06.87 BE 8700643**

(43) Date de publication de la demande:
**14.12.88 Bulletin 88/50**

(84) Etats contractants désignés: **DE FR GB IT NL**

(71) Demandeur: **Coignet, Etienne**
**34, Grand'Route**
**B-7530 Tournai (BE)**

(72) Inventeur: **Coignet, Etienne**
**34, Grand'Route**
**B-7530 Tournai (BE)**

(74) Mandataire: **Overath, Philippe et al**
**Cabinet Bede 13, Avenue Antoine Depage**
**B-1050 Bruxelles (BE)**

(54) **Procédé et dispositifs de protection et de contrôle d'installations électriques alimentées par transformateur et du transformateur lui-même.**

(57) Le transformateur est muni d'un circuit de détection (20) pouvant mesurer le décalage de tension (Volts/tour) provoqué par la dispersion magnétique entre les enroulements primaire ($P_a$) et secondaire ($S_a$) à l'aide de deux enroulements de test ($P_t$,$S_t$) reliés en série mais en opposition l'un de l'autre. Lorsque ce décalage de tension (Volts/tour) dépasse un seuil prédéterminé, un circuit de décision (logique) (30) entraîne le déclenchement de l'alimentation du transformateur, l'interruption du circuit d'utilisation et/ou l'alimentation d'un circuit de contrôle.

FIG. 6

**EP 0 295 234 A1**

**Description**

La présente invention se rapporte à un procédé et à des dispositifs de mise en oeuvre de ce procédé pour la protection et le contrôle d'installations électriques alimentées par transformateur ainsi que pour la protection du transformateur lui-même en évitant le problème du courant d'enclenchement (de magnétisation) du transformateur.

On sait qu'un transformateur est en général composé d'un circuit magnétique, par exemple en tôles ou en ferrite, et d'au moins deux enroulements électriquement séparés ou non : un enroulement primaire à l'entrée et un enroulement secondaire à la sortie.

Le rapport entre les nombres de spires des enroulements détermine le rapport du transformateur.

Si l'on exclut la protection par disjoncteur différentiel, dont le but est plus de protéger l'utilisateur d'une installation plutôt que l'installation elle-même, les circuits électriques peuvent actuellement être protégés par les systèmes suivants : fusibles, disjoncteurs magnétiques, thermiques ou combinaisons de ces différents principes assistées ou non par l'électronique.

Si on place des fusibles ou disjoncteurs ou une protection quelconque entre le secondaire du transformateur et le circuit d'utilisation, le transformateur n'est pas protégé.

Si on place la protection entre le réseau d'alimentation et le transformateur, le courant d'enclenchement (de magnétisation) du transformateur est tel qu'il faut surdimensionner la protection ce qui la rend illu soire. De toute manière, le temps de réaction des systèmes de protection et de contrôle habituels est tel qu'en cas de court-circuit dans le circuit utilisateur, les dommages à l'intérieur de celui-ci sont inévitables.

Le but de la présente invention est de remédier aux inconvénients cités ci-dessus par des moyens simples et efficaces.

Le principe général du système selon l'invention est basé sur la dispersion magnétique des transformateurs. En effet, dans un transformateur il y a toujours une certaine perte de flux magnétique entre le ou les enroulement(s) primaire et secondaire.

Cette perte de flux entraîne un certain décalage dans les rapports volts/tour respectivement dans les enroulements primaire et secondaire.

Ce décalage augmente rapidement lorsque la charge de l'enroulement secondaire augmente et a fortiori en cas de court-circuit.

Dans certains cas il peut être intéressant d'exacerber le phénomène en augmentant la dispersion magnétique du transformateur par des moyens appropriés tels que distancement des enroulements primaire et secondaire, shunt magnétique, etc...

L'objet de l'invention comprend un circuit de détection pouvant mesurer ce décalage de tension (volts/tour) entre l'enroulement primaire et l'enroulement secondaire, et un circuit de décision ci-après appelé circuit logique qui, lorsque ce décalage de tension (appelé ci-après tension de test) dépasse un seuil prédéterminé, entraîne le déclenchement de l'alimentation du transformateur, l'interruption du circuit utilisateur et/ou l'alimentation d'un circuit de contrôle. La détection se fait à l'aide de deux enroulements de test bobinés respectivement du côté de l'enroulement primaire et du côté de l'enroulement secon daire du transformateur, ces enroulements de test ayant chacun un nombre de tours (spires) égal ou sensiblement égal qui sont reliés en série mais en opposition de manière que les tensions qu'ils génèrent se soustraient l'une de l'autre. Ce branchement sera appelé ci-après anti-série.

Au repos, la composante en tension de ces deux enroulements couplés en anti-série sera donc proche de zéro volt mais à mesure qu'on applique une charge au secondaire et a fortiori une surcharge, cette tension de test augmente très violemment et permet donc l'alimentation du circuit logique.

Dans la pratique, et pour autant que les exigences d'isolement le permettent, les enroulements de test peuvent avoir des parties communes avec les enroulements actifs (primaire ou secondaire) et ainsi prendre en compte la chute résistive du secondaire actif et donc augmenter encore la sensibilité du système.

Le circuit logique peut être réalisé soit par des relais soit par un circuit électronique, soit par une combinaison des deux de la manière la plus simple et la plus précise du fait que le signal qu'il reçoit du transformateur représente déjà une valeur fortement amplifiée de l'état de (sur-)charge du transformateur.

Ce circuit logique peut bien entendu couper l'alimentation du transformateur, interrompre le circuit d'utilisation ou alimenter lui-même n'importe quel circuit de contrôle.

Afin de bien comprendre l'objet de l'invention on en décrira ci-après des exemples de réalisations en se référant aux dessins annexés dans lesquels :

les figures 1 à 5 : sont des schémas de diverses possibilités de réaliser le circuit de détection du décalage de tension (volts/tour) entre les enroulements primaire et secondaire.

la figure 6 représente un exemple de réalisation d'un circuit logique associé à un circuit de détection de la figure 2.

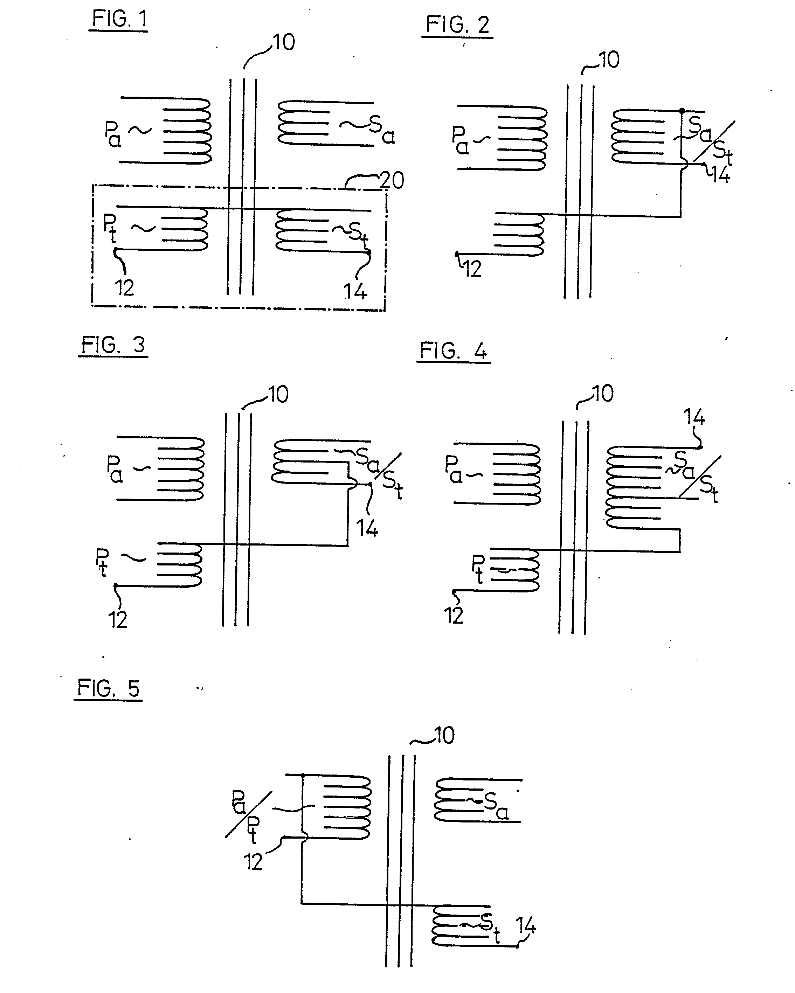

Sur les figures 1 à 5 on a chaque fois représenté l'enroulement primaire actif d'alimentation $P_a$ et l'enroulement secondaire actif d'utilisation $S_a$ d'un transformateur classique comportant un circuit magnétique 10 constitué par un empilage de tôles ou par un noyau de ferrite.

L'enroulement primaire $P_a$ comprend un nombre $n_1$ de spires alimentées par une tension alternative et l'enroulement secondaire $S_a$ comprend un nombre $n_2$ de spires reliées à un circuit d'utilisation.

Le rapport de transformation à vide du transformateur entre l'entrée (primaire) et la sortie (secondaire) est égal au rapport des nombres de spires

$$\frac{n_1}{n_2}.$$

Conformément à l'invention, on associe à ces enroulements $P_a$, $S_a$ existants un circuit de détection 20 comprenant deux enroulements de test respectivement bobinés du côté primaire $P_t$ et secondaire $S_t$ ayant chacun un nombre de spires sensiblement égal, reliées en anti-série.

Sur la figure 1, on a représenté les bobinages de test $P_t$ et $S_t$ comme distincts des enroulements actifs $P_a$ et $S_a$. Si la tension délivrée par le secondaire $S_a$ ne pose pas de problème d'isolation pour le circuit de détection il est plus simple de prendre tout (fig.2) ou partie (fig.3) de ce secondaire actif $S_a$ comme enroulement de test secondaire $S_t$, même s'il s'avère nécessaire de lui adjoindre des spires supplémentaires (fig.4) en série pour atteindre le nombre voulu.

Si la tension primaire se prête mieux que la tension secondaire à cette opération c'est bien entendu également possible (fig.5).

La tension de test sera relevée entre les points 12 et 14.

Les caractéristiques du circuit de détection 20 vont dépendre entre autres des paramètres suivants : du nombre de spires des enroulements de test, de leur proximité vis à vis des enroulements actifs, du diamètre de fil utilisé et de la dispersion magnétique du transformateur.

Le nombre de tours à prévoir dans les enroulements de test $P_t$ et $S_t$ du circuit de détection est déterminé par la contrainte de base représentée par le seuil de tension auquel le circuit logique basculera. Ce seuil pourra varier selon que l'on travaille avec des semi-conducteurs ou avec des relais électromécaniques, et selon le type de ceux-ci. D'une manière générale, plus ce seuil sera bas plus souple sera le système.

Connaissant les tours/volt primaire et secondaire du transformateur qu'on désire protéger on peut calculer les Volts/tour respectifs et donc aussi la différence entre ces deux valeurs c'est-à-dire les Volts ou les fractions de Volt qui apparaîtront dans l'éventualité de la mise en anti-série d'une spire primaire avec une spire secondaire.

En divisant le seuil de tension à atteindre par cette valeur on obtient le nombre de tours à prévoir dans chacun des bobinages de test.

Dans la pratique et pour éviter de devoir bobiner des tours (spires) en trop grand nombre on n'est pas tenu de conserver l'égalité absolue du nombre de tours dans les deux bobinages de test. On comprend aisément qu'en prévoyant un tour de plus au primaire $P_t$ qu'au secondaire $S_t$, le nombre de tours à prévoir sera notablement plus faible, toutefois la surproportionnalité entre la tension de test et la (sur-)charge du transformateur sera moins marquée. Par contre, si besoin était, on pourrait améliorer les caractéristiques de surproportionnalité en prévoyant au contraire un ou plusieurs tours de moins au primaire qu'au secondaire.

Concernant l'ordre de grandeur du nombre de tours (spires) à prévoir on remarquera que - en prévoyant plus de tours on augmente la sensibilité du signal mais on augmente aussi le coût de fabrication - inversément un nombre de tours plus petit réduira le coût mais la sensibilité sera réduite.

En ce qui concerne le diamètre de fil à prévoir dans les bobinages de détection :
Il suffit de se référer à la consommation du circuit logique qu'on emploie et de tenir compte du coefficient de densité de courant qu'on choisit habituellement pour cette puissance de transformateur.

Toutefois les courants sont généralement si faibles qu'on choisira souvent un fil un peu plus gros pour ne pas rendre la mise en oeuvre de ce fil trop délicate.

Le principe même de l'objet de l'invention repose sur la dispersion magnétique des transformateurs.

Dans la plupart des cas, on peut réaliser le système en question en exploitant la dispersion magnétique naturelle du transformateur. Ceci est particulièrement vrai pour les transformateurs de distribution où il est généralement requis d'avoir une tension de court-circuit de 4 à 8%. C'est également vrai pour les transformateurs de sécurité où il devient de plus en plus usuel de bobiner le primaire et le secondaire côte à côte et non plus l'un au-dessus de l'autre.

Dans les cas où la dispersion magnétique naturelle du modèle envisagé ne serait pas suffisante pour obtenir la précision souhaitée on pourra utilement augmenter celle-ci par les moyens habituels, connus des constructeurs (bobinage primaire et secondaire partiel lement ou totalement en opposition, distancement des bobinages primaires et secondaires, shunt magnétique entre primaire et secondaire, etc...).

Si on ne désire pas augmenter la tension de court-circuit au-delà d'un certain niveau on augmentera sensiblement l'ordre de grandeur du nombre de tours des bobinages de test ou on choisira un circuit logique qui basculera à un seuil de tension très bas (électronique).

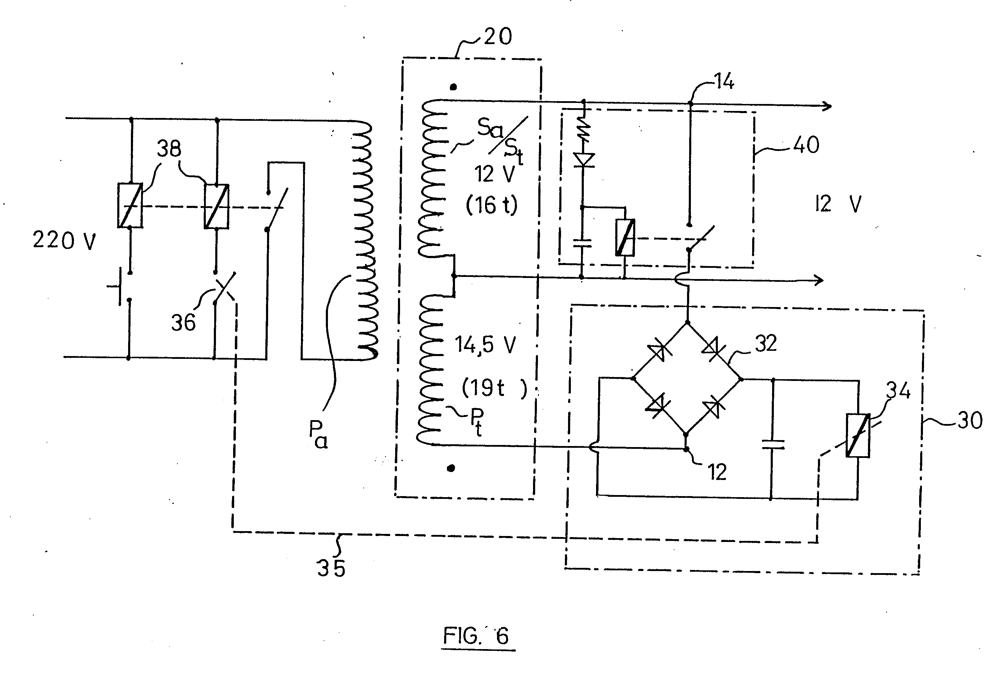

A la figure 6 on a représenté un schéma de réalisation pratique d'un dispositif selon l'invention comprenant un transformateur muni d'un enroulement primaire actif $P_a$ relié à l'alimentation (réseau) de 220 V et un enroulement secondaire $S_a$ relié à un circuit utilisateur de 12 V. Conformément à l'invention on prévoit un enroulement de test du côté primaire $P_t$ qui est relié en série mais en opposition avec l'enroulement secondaire actif $S_a$ faisant ainsi simultanément office d'enroulement de test secondaire $S_t$. Ces deux enroulements $P_t$ et $S_t$ constituent donc le circuit de détection du décalage de tension entre primaire et secondaire.

Les extrémités de ces enroulements $P_t$ et $S_t$ sont reliés aux points 12 et 14 au circuit logique 30 qui dans l'exemple représenté comprend un pont redresseur 32 avec condensateur de filtrage et un relais de déclenchement 34.

Ce relais 34 de basse tension comporte (liaison 35) un contact 36 qui actionne un relais de puissance bistable 38 qui à son tour coupe l'alimentation en 220 V de l'enroulement primaire $P_a$ du transformateur.

On peut également prévoir un circuit 40 de temporisation à l'enclenchement qui a pour but d'éviter que le dispositif ne déclenche tout de suite après la mise sous tension suite à l'éventuel courant de démarrage de la charge alimentée par le transformateur.

Dans l'exemple décrit le transformateur est un transformateur de sécurité destiné à alimenter un éclairage halogène de 400 Watts en 12 V à partir d'un réseau de 225 V.

On choisira une carcasse à deux gorges de manière à satisfaire aisément aux exigences d'isolation.

Par le fait du bobinage côte à côte ce modèle a déjà une tension de court-circuit de l'ordre de 7,5%.

Au vu de la qualité de tôle et de l'empilage utilisé on travaille habituellement avec 1,31 t/v primaire et 1,33 t/v secondaire soit respectivement 295 tours primaire et 16 tours secondaire.

On envisage d'utiliser un circuit logique dont le seuil de basculement se situe vers 2,6 V.

On calcule les Volts/tour primaire et secondaire soit respectivement 0,763 et 0,752. De là, la différence en V/tour primaire et secondaire = 0,011.

Il ressort de ces chiffres qu'en bobinant 226 tours du côté primaire branchés en anti-série avec 226 tours du côté secondaire le bobinage de test produira juste un peu moins de 2,6 V lorsque le transformateur sera à charge nominale.

Cette tension montera donc à la plus légère surcharge et fera basculer le circuit logique.

En réalité il est inutile de bobiner un aussi grand nombre de tours et il est surtout très intéressant d'employer les 16 tours du secondaire utilisateur comme bobinage de test.

On emploiera donc un bobinage de test primaire comportant trois tours de plus que le secondaire actif $S_a/S_t$ soit 19 tours produisant 14,5 V et qui étant opposé au secondaire utilisateur de 12 V fournira une tension de 2,5 V au circuit logique pour une charge nominale du transformateur.

Concernant les diamètres de fil :
Pour faciliter la tâche du bobineur, et bien que le courant qui y passe ne sera pas supérieur à quelques milli-ampères, on réalisera ces 19 tours dans le même fil que le primaire soit 0,8 mm dans l'exemple décrit.

Ce choix de tours permet d'allier un prix de fabrication très avantageux des bobinages de test sans exiger un circuit logique particulièrement performant et sans passer par le montage d'un shunt magnétique qui nuirait à la stabilité en tension du transformateur.

En effet, pour une surcharge en Watt de
12% la tension de test passe à 2,62 V
20% la tension de test passe à 2,68 V
39% la tension de test passe à 2,81 V
69% la tension de test passe à 3,01 V
92% la tension de test passe à 3,19 V
Comme avantages de la présente invention on peut citer :
- le système proposé a un temps de réaction tellement bref que même en cas de court-circuit franc entre deux conducteurs les traces d'arc sont négligeables si pas imperceptibles à l'oeil;
- le système n'est aucunement influencé par le courant d'enclenchement du transformateur et peut de ce fait être calibré au plus juste;
- le système est insensible aux éventuelles fluctuations en tension du réseau;
- aucun élément ne chauffe ou ne fatigue si l'appareil fonctionne longtemps à son seuil de déclenchement ce qui dans d'autres systèmes entraîne des déclenchements intempestifs;
- après un déclenchement on peut réenclencher sans le moindre délai d'attente (pour autant que la cause du déclenchement soit levée);
- ce système de protection réagit avec une telle promptitude que dans certains cas, il est intéressant de prévoir des temporisations au déclenchement, par exemple pour éviter la pointe d'enclenchement du circuit d'utilisation, cette précaution permet de calibrer au plus juste sans devoir prendre de marge de sécurité et donc de tirer le maximum de profit du système.

**Revendications**

1. Procédé de protection et de contrôle d'installations électriques alimentées par transformateur et du transformateur lui-même, ce dernier comprenant au moins un enroulement primaire ($P_a$) et au moins un enroulement secondaire ($S_a$) séparé ou non entre lesquels une dispersion magnétique entraîne un décalage de tension (Volts/tour) lorsque le transformateur est en charge, caractérisé en ce qu'il détecte et mesure ce décalage de tension (volts/tour) entre les enroulements primaire et secondaire, et lorsque ce décalage dépasse un seuil prédéterminé entraîne le déclenchement de l'alimentation du transformateur, l'interruption du circuit utilisateur et/ou l'alimentation d'un circuit de contrôle.

2. Dispositif pour la mise en oeuvre du procédé selon la revendication 1, comprenant un transformateur qui possède au moins un enroulement primaire ($P_a$) raccordé à l'alimentation et au moins un enroulement secondaire ($S_a$) séparé ou non relié à un circuit utilisateur, entre lesquels il y a une dispersion magnétique entraînant un décalage de tension (volts/tour) lorsque le transformateur est en charge, caractérisé en ce que l'on prévoit un circuit de détection (20) pouvant mesurer ce décalage de tension (volts/tour) et un circuit de décision (logique) (30) qui, lorsque ce décalage de tension dépasse un seuil prédéterminé, entraîne le déclenchement de l'alimentation du transformateur, l'interruption du circuit utilisateur et/ou l'alimentation d'un circuit de contrôle.

3. Dispositif selon la revendication 2, caractérisé en ce que le circuit de détection (20) est constitué par au moins deux enroulements de test ($P_t,S_t$) bobinés respectivement du côté de l'enroulement primaire et du côté de l'enroulement secondaire du transformateur, ces enroulements de test ont chacun un nombre de tours (spires) égal ou sensiblement égal et sont reliés en série mais en opposition de manière que les tensions qu'ils génèrent se soustraient l'une de l'autre.

4. Dispositif selon la revendication 3, caractérisé en ce que, pour autant que les exigences d'isolement le permettent, les enroulements de test ($P_t,S_t$) peuvent avoir des parties communes avec les enroulements actifs ($P_a,S_a$).

5. Dispositif selon la revendication 3, caractérisé en ce que les enroulements de test sont constitués d'une part par un enroulement ($P_t$) bobiné du côté de l'enroulement primaire du transformateur et d'autre part par l'enroulement secondaire actif ($S_a$) lui-même.

6. Dispositif selon la revendication 3, caractérisé en ce que le nombre de spires de chaque enroulement de test est calculé selon la sensibilité désirée de manière à obtenir, lorsque le transformateur travaille à sa charge nominale ou à une valeur proche, une tension de test qui est proche du seuil de déclenchement et dont la variation est amplifiée par rapport à la variation de la charge du transformateur.

7. Dispositif selon la revendication 2, caractérisé en ce que, pour exacerber la sensibilité du dispositif, la dispersion magnétique du transformateur est augmenter par tous moyens appropriés.

13

0295234

FIG. 1

$P_a \sim$    $\sim S_a$

10

$P_t \sim$    $\sim S_t$

12     14

20

FIG. 2

$P_a \sim$    $S_a / S_t$

10

14

12

FIG. 3

$P_a \sim$    $S_a / S_t$

10

14

$P_t \sim$

12

FIG. 4

$P_a \sim$    $S_a / S_t$

10

14

$P_t \sim$

12

FIG. 5

$P_a / P_t$    $\sim S_a$

10

12     $\sim S_t$   14

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 863 109 (EMANUEL)<br>* Figure 10; colonne 7, lignes 44-49; revendications 7,8 *<br>--- | 1-3 | H 02 H 7/04 |
| A | DE-A-2 439 931 (MEIDENSHA)<br>* Figures 7,11,12; page 18, ligne 1 - page 19, ligne 26 *<br>--- | 1-3 | |
| A | DE-A-1 539 402 (FLOR)<br>* Page 1, ligne 16 - page 2, ligne 21 *<br>----- | 1 | |

DOMAINES TECHNIQUES
RECHERCHES (Int. Cl.4)

H 02 H

Le présent rapport a été établi pour toutes les revendications

| Lieu de la recherche | Date d'achèvement de la recherche | Examinateur |
|---|---|---|
| LA HAYE | 24-08-1988 | KOLBE W.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)